# EUROPEAN PATENT APPLICATION

(11) **EP 3 021 499 A1**
(43) Date of publication of application: **18.05.2016**
(21) Application number: 14003804.3
(22) Date of filing: 12.11.2014
(51) Int. Cl.: H04B 7/26, H04W 56/00

(54) **Device and method for clock synchronization in real time locating system**

(71) Applicant: Biocontrol Polska Sp. z o.o., 15-516 Bialystok (PL)
(72) Inventor: The designation of the inventor has not yet been filed

(57) **Abstract**

A high-accuracy time synchronization apparatus in an RTLS and a method thereof are provided to enable an RTLS receiver (anchor) to receive clock signal, synchronization signal, power and measure accurate time of arrival information of an RTLS transmitter (tag), thereby performing the high-accuracy time synchronization so as for the current time to be updated as an exact local time value within the range of a sub nano unit error. A high-accuracy time synchronization apparatus in an RTLS comprises the followings: a transceiving unit (12) which receives a synchronization pulse, clock signal and is powered from a time synchronization server (11) or repeaters (14), and transceives time information data to data server (13);

## Description

### Technical Field

The present invention relates to an apparatus for synchronizing a clock in a real-time locating system (RTLS) (Real-Time Locating System) and a method therefor; and, more particularly, to an apparatus for synchronizing a clock in an RTLS and a method therefor, which perform a highly precise clock synchronization by receiving the synchronization pulse from a clock synchronization distributor in real-time and measuring the precise location information of an RLTS transmitter at an RTLS receiver.

### Background Art

A real-time locating system (RTLS) is a system which checks the location of any objects in real-time based on a specific technique using radio frequency identification (RFID) or a wireless LAN, and may be used in various fields.

In general, the RTLS technique includes an RTLS transmitter, e.g., an RFID tag which is attached to each object, and an RTLS receiver, e.g., an RFID reader which reads an identifier of the object having the RFID transmitter in a wireless communication. The RTLS technique provides a position service of an object by collecting, storing and processing the object information, and tracking the object. The RTLS receiver recognizes the position of the RTLS transmitter based on position information including intensity, a receiving time and a receiving direction of a signal transmitted from the RTLS transmitter.

However, although it is requested that clocks of the RTLS all receivers in were synchronized in order to recognize the position of the RTLS transmitter in case of TDOA (Time Difference of Arrival) system.

Accordingly, it is necessary to provide a method for synchronizing a clocks into a highly precise standard time having an error range of a sub nano-unit through each reader which receives clock information from a clock synchronization server.

### Disclosure

### Technical Problem

It is, therefore, an object of the present invention to provide to an apparatus for synchronizing a clock in an RTLS and a method therefor, which performs a highly precise clock synchronization so that a current time is updated to be a correct local time value within an error range of a sub nano-unit by receiving the clock signal from a clock synchronization server in real time and measuring the precise location information of an RLTS transmitter at an RTLS receiver.

The other objectives and advantages of the invention will be understood by the following description and will also be appreciated by the embodiments of the invention more clearly. Further, the objectives and advantages of the invention will readily be seen that they can be realized by the means and its combination specified in the claims.

### Technical Solution

In accordance with an embodiment of the present invention, there is provided a highly precise clock synchronization apparatus in a real-time locating system (RTLS), including: transmitting/receiving means for receiving a clock signal from a clock synchronization server and transmitting/receiving the clock information data and the clock information; means for generating and detecting a synchronization signal and a clock and detecting errors in receiving clock signal.

In accordance with another embodiment of the present invention, there is provided a method for synchronizing a highly precise clock in a real-time locating system (RTLS), including the steps of: establishing communication between all parts of the locating system; information exchange to cause generating synchronization pulse signal when all anchors are ready waiting for the pulse.

In accordance with another embodiment of the present invention, there is provided a method for synchronizing a highly precise clock in a real-time locating system (RTLS), further including: detecting of presence of the pulse; detecting of errors in clock signal.

### Advantageous Effects

The present invention provides a simple and low cost hardware configuration by using a synchronization signal for a highly precise clock synchronization.

In particular, the present invention may perform a highly precise clock synchronization on a sub nano-second basis within an error range of each RTLS receiver which receives the clock signal from the clock synchronization server by providing a clock synchronization apparatus having an transmitting/receiving unit and error detection unit.

### Description of Drawings

Fig. 1 illustrates a highly precise clock synchronization apparatus coupled to a clock synchronization server or repeater in an RTLS in accordance with an embodiment of the present invention;

Fig. 2 illustrates schematic of the algorithm of a clock synchronization in a highly precise clock synchronization apparatus of an RTLS and clock server and data server in accordance with an embodiment of the present invention.

### Best Mode for the Invention

The above-mentioned objectives, features, and advantages will be more apparent by the following detailed description associated with the accompanying drawings, and thus, a person skilled in the art will easily carry out the present invention. Further, in the following description, well-known arts will not be described in detail if it appears that they could obscure the invention in unnecessary detail. Hereinafter, preferred embodiments of the present invention will be set forth in detail with reference to the accompanying drawings.

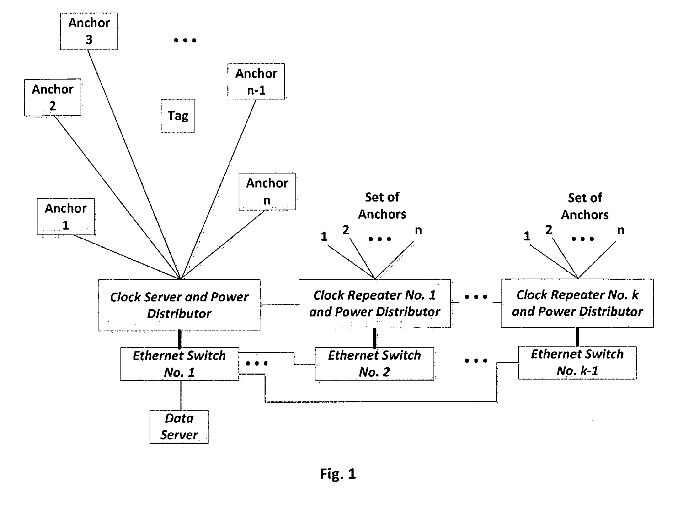

Fig. 1 illustrates a highly precise clock synchronization apparatus coupled to a clock synchronization server or clock repeater in an RTLS in accordance with an embodiment of the present invention.

In the drawing, "11" denotes a clock synchronization server which is the source of clock signal and clock synchronization pulses. "12" denotes a plurality of RTLS receiver (anchor) which receive the clock signal and synchronization pulses through communication line and receive a data packets from RTLS transmitter add information about a time of arrival of the data and send these packets to data server. "14" denotes a plurality of clock repeaters which distribute clock and synchronization signals to required number of RTLS receivers. "13" denotes a data server which coordinates communication between RTLS receivers and clock synchronization server, stores time data from RTLS receivers and calculates positions of RTLS transmitters (tags).

As shown in Fig. 1, the RTLS in accordance with an embodiment of the present invention includes the clock synchronization server **11** and the plurality of RTLS receivers **12** coupled to the clock synchronization server **11.** The clock synchronization server **11** transmits clock and synchronization signal to the plurality of RTLS receivers **12.** The plurality of RTLS receivers **12** update a local clock value according to synchronization pulse from clock synchronization server **11,** and transmits the response packet frame including, the preamble, the RTLS receiver identifier, the timestamp to the data server.

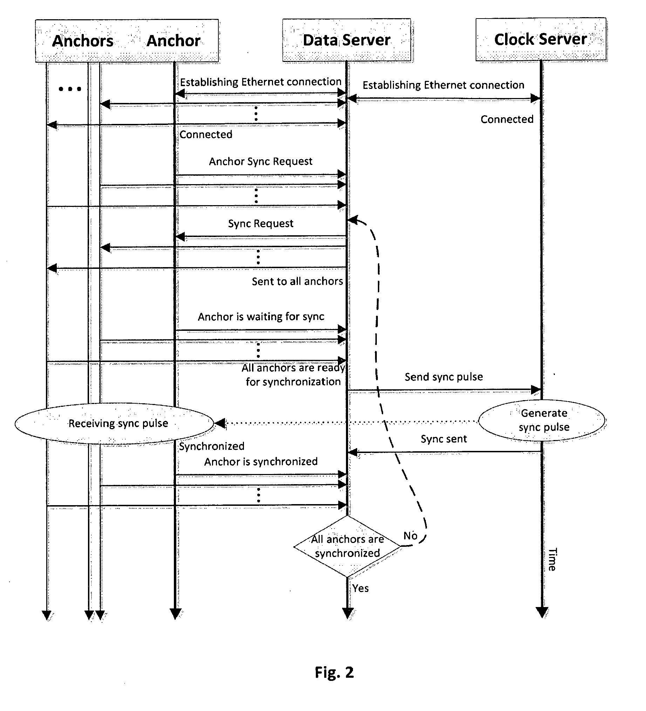

Fig. 2 shows the procedure of synchronization between clock synchronization server **11** and RTLS receivers **12** in a highly precise clock synchronization apparatus of an RTLS in accordance with an embodiment of the present invention.

Firstly the clock synchronization server **11,** RTLS receivers (Anchors) and data server establishing connection between each other usually using local Ethernet network.

Next the RTLS receiver/receivers send synchronization request to data server.

Data server **13** sends synchronization request back to all RTLS receivers. On this request all RTLS receivers go to waiting mode for synchronization signal from clock synchronization server **12** and send acknowledge that they are waiting to data server **13.**

Data server **13** sends synchronization request to clock synchronization server **11** which generates clock pulse for all RTLS receivers **12.**

Data server **13** waits for synchronization acknowledge from RTLS receivers **12.** In case of lack of acknowledge from any of RTLS receivers **12** the sync request packet is send again to all RTLS receivers and the synchronization process is repeated.

Clock repeaters **14** in accordance with an embodiment of the present invention are the devices which task is to receive clock and synchronization signals from clock synchronization server **11** and distribute them to another sets of RTLS receivers **12.** These are clearly hardware devices used to scale up the system appropriate to the size of the area where the system is used.

While the present invention has been described with respect to certain preferred embodiments, it will be apparent to those skilled in the art that various changes and modifications may be made without departing from the spirits and scope of the invention as defined in the following claims.

## Claims

1. A highly precise clock synchronization apparatus in a real-time locating system (RTLS), comprising:
transmitting/receiving means for receiving a clock signal from a clock synchronization server and
transmitting/receiving the clock information data and the clock information; means for generating and detecting a synchronization signal and a clock and detecting errors in receiving clock signal.

2. The apparatus as recited in claim 1, wherein the clock synchronization server or repeater transmits the clock signal and synchronization pulse to anchor, and data server receives a response packet frame as a response signal of a synchronization pulse, the response packet frame including acknowledge of receiving synchronization pulse.

3. The apparatus as recited in claim 2, wherein the time of arrival is a receiving preamble detection time, where the receiving preamble detection time is a timestamp value when the preamble received from the transmitter (tag).

4. A method for synchronizing a highly precise clock in a real-time locating system (RTLS), comprising the steps of: establishing data connection (e.g. using Ethernet) between data server, anchors and clock server, sending of synchronization request frames from anchors to data server, sending synchronization request back from data server to anchors, sending acknowledge frames from anchors to data server, sending synchronization pulse request frame to clock server, receiving acknowledge frames from anchors and clock server, in case of lack of acknowledge frame/frames repeating the procedure;

5. The method as recited in claim 4, further comprising: detecting of lack of synchronization pulse in anchors.

6. The method as recited in claim 5, further comprising: detecting of time errors in clock signal from clock server in anchors.
